Europäisches Patentamt

European Patent Office

Office européen des brevets

(11) Numéro de publication: **0 205 716**
A2

## (12) DEMANDE DE BREVET EUROPEEN

(21) Numéro de dépôt: 85402570.7

(22) Date de dépôt: 28.10.83

(51) Int. Cl.⁴: **B65H 27/00**

(30) Priorité: 29.10.82 FR 8218145
29.07.83 FR 8312584

(43) Date de publication de la demande:
**30.12.86 Bulletin 86/52**

(60) Publication number of the original application in accordance with Art.76 EPC: 0 110 751

(84) Etats contractants désignés:
**AT BE CH DE FR GB IT LI LU NL SE**

(71) Demandeur: **NEWTEC INTERNATIONAL**
**Boulevard Lepic**
**F-73106 Aix-les-Bains(FR)**

(72) Inventeur: **Thimon, Hubert**
**102, avenue de Marlioz**
**F-73100 Aix Les Bains(FR)**
Inventeur: **Jacquier, Paul**
**La Chesnaie 37, Chemin des Bruyères**
**F-69160 Tassin-La-Demi-Lune(FR)**

(74) Mandataire: **Derambure, Christian**
**Cabinet BUGNION ASSOCIES SARL 116,**
**boulevard Haussmann**
**F-75008 Paris(FR)**

(54) Dispositif d'obtention de vitesses différentielles tangentielles variables en divers points d'un film déformable.

(57) L'invention concerne un dispositif d'étirage.

Ce dispositif est tel que les vitesse différentielles tangentielles $V_N$ sont variables en divers points d'un film (1) plan ou plaque plane déformable, se déplaçant le long d'au moins un rouleau d'étirage - (3) tournant autour d'un axe XX, le film (1) ou plaque se déplaçant dans une direction perpendiculaire à l'axe de rotation du rouleau, et s'appuyant sur une génératrice $G_N$ du rouleau. Le rouleau (3) a une vitesse de rotation N constante dans le temps, tandis que la distance $G_N C_1$ entre la génératrice d'appui $G_N$ du film et l'axe $C_1$ de rotation du rouleau est variable dans le temps.

L'invention est applicable à l'étirage de film plastique.

FIG.1

## DISPOSITIF D'OBTENTION DE VITESSES DIFFERENTIELLES TANGENTIELLES VARIABLES EN DIVERS POINTS D'UN FILM DEFORMABLE.

L'invention concerne un dispositif permettant d'obtenir des vitesses différentielles variables en divers points d'un film plan ou plaque plane, notamment déformable et plus particulièrement déformable élastiquement ou plastiquement.

On sait que dans de nombreuses industries il est nécessaire d'étirer des produits en forme de feuilles, en particulier dans l'industrie des produits textiles ou métallurgiques, en vue de l'amincissement ou du laminage de ces produits. Il est parfois nécessaire de réaliser une prétension ou des précontraintes de produits plastiques, métallurgiques ou textiles. Enfin, dans l'industrie de l'emballage, on étire des films plastiques avant de les disposer autour de charges palettisées et de les faire rétracter naturellement ou non.

En général, pour effectuer ces opérations, il est nécessaire d'obtenir des vitesses distinctes entre deux points distincts du film. Pour ce faire, il est connu d'utiliser deux rouleaux, tournant autour d'axes parallèles, avec une vitesse de rotation différente. Ainsi, en général, la vitesse du rotation du rouleau en aval est supérieure à la vitesse du rotation du rouleau en amont. La variation des vitesses angulaires des rouleaux en rotation est obtenue en particulier par des dispositifs mécaniques, électroniques, hydrauliques, par des boîtes à vitesse, des engrenages, etc ... Cependant, les dispositifs connus ne permettent pas de faire varier le rapport des vitesses dufférentielles tangentielles d'une valeur très supérieure à 1, par exemple allant jusqu'à 3. De plus, dans le cas de banderolage de palettes en phase de démarrage, il n'est pas possible d'obtenir un rapport de vitesses différentielles égal à 1 sans utiliser des dispositifs d'embrayage.

L'invention vise à pallier ces inconvénients.

L'invention concerne un dispositif d'obtention de vitesses différentielles tangentielles variables en divers points d'un film plan ou plaque plane déformable, se déplaçant le long d'au moins un rouleau d'étirage tournant autour d'un axe, le film ou plaque se déplaçant dans une direction perpendiculaire à l'axe de rotation du rouleau, et s'appuyant sur une génératrice du rouleau d'étirage.

Ce dispositif est caractérisé par le fait que le rouleau a une vitesse de rotation constante dans le temps, tandis que la distance entre la génératrice d'appui du film et l'axe de rotation du rouleau est variable dans le temps.

Selon un premier mode de réalisation, le rouleau d'étirage est formé par une pluralité de génératrices contigües dont la distance à l'axe de rotation augmente de façon continue dans le temps, depuis la génératrice aval que le film étiré quitte.

Selon un deuxième mode de réalisation, le rouleau d'étirage est un cylindre déformable, notamment de révolution à base circulaire, dont l'axe de rotation est décalé par rapport à l'axe de révolution, la distance entre les génératrices contigües augmentant de façon continue dans le temps depuis la génératrice amont sur laquelle parvient le film non étiré jusqu'à la génératrice aval que le film étiré quitte.

Le film s'appuie sur la génératrice au moyen d'au moins un organe de compression exerçant une pression contre le rouleau, notamment un rouleau d'appui, cet organe se déplaçant en rotation sur lui-même en fonction du déplacement de la génératrice d'appui, le film étant placé entre l'organe d'appui et le rouleau.

La rapport entre la distance initiale $R_0$ entre la génératrice amont et l'axe de rotation et la distance finale $R_1$ entre la génératrice aval et l'axe de rotation, est réglable.

Enfin, selon un troisième mode de réalisation, le film est entraîné par la rotation de deux rouleaux cylindriques de révolution, à base circulaire, d'axes de rotation parallèles, le rayon $R_0$ amont et la rayon $R_1$ aval étant variables dan le temps. De plus, le rapport d'étirage, plus particulièrement le rapport de la vitesse différentielle tangentielle $V_1$ en un point du film aval après étirage et la vitesse différentielle tangentielle $V_0$ en un point du film en amont, avant étirage, est proportionnel au rapport entre le rayon $R_1$ du rouleau aval et le rayon $R_0$ du rouleau amont.

On comprend que le dispositif selon l'invention apporte des avantages importants par rapport aux dispositifs connus. En effet, l'étirage est réglé facilement soit en modifiant la position de l'axe de rotation par rapport à l'axe de révolution ce qui modifie la distance entre la génératrice sur laquelle s'appuie le film et l'axe de rotation du rouleau, soit en modifiant les rayons des rouleaux l'un par rapport à l'autre. Par ailleurs, on peut éventuellement utiliser plusieurs rouleaux qui, par variation de leur rayon, permettent d'obtenir des vitesses différentielles variables.

La description suivante, en regard des dessins annexés à titre d'exemples non limitatifs permettra de comprendre comment l'invention peut être mise en pratique.

La figure 1 est une vue schématique d'un premier mode de réalisation.

La figure 2 est une vue schématique d'un deuxième mode de réalisation de l'invention.

La figure 3 est une vue en perspective d'un troisième mode de réalisation.

Les figures 4A et 4B montrent la variation des rayons des rouleaux respectivement pour un étirage minimum et pour un étirage maximum.

La figure 5 montre un premier mode de réalisation d'un rouleau.

La figure 6 montre un second mode de réalisation d'un rouleau.

Les figures 7A et 7B représentent une première variante du troisième mode de réalisation avec étirage minimum (7A) et étirage maximum - (7B).

Les figures 7C et 7D sont des vues - schématiques de dessus d'une part des rouleaux et d'autre part des moyens de commande des organes permettant l'expansion ou la contraction des rouleaux.

Les figures 8A et 8B, représentent une seconde variante de ce dernier mode de réalisation de l'invention, avec étirage minimum et maximum respectivement.

La figure 9 est une vue latérale d'une autre variante de rouleau selon l'invention.

La figure 10 est une vue agrandie d'un détail du rouleau de la Figure 9.

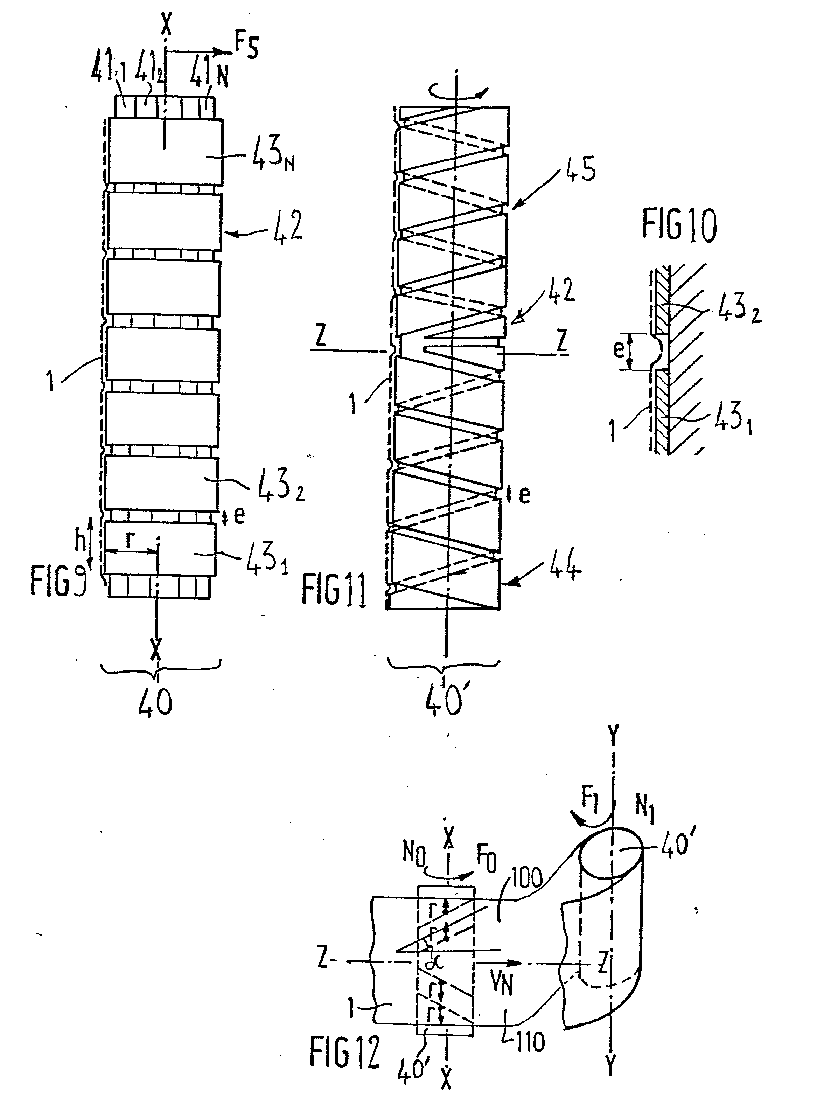

La figure· 11 est une vue latérale d'une autre variante, similaire à celle de la figure 9.

La figure 12 illustre schématiquement le fonctionnement d'un dispositif selon l'invention équipé de rouleaux conformes à celui de la figure 11.

Le dispositif selon l'invention permet d'obtenir des vitesses différentielles tangentielles variables en divers points d'un film plan ou d'une plaque plane déformable, en particulier un film plastique déformable élastiquement ou plastiquement. On sait que la déformation élastique est réversible et que le film, lorsqu'il n'est plus étiré revient à sa position initiale, tandis que la déformation plastique est partiellement irréversible et le film lorsqu'il n'est plus étiré a une longueur finale supérieure à sa longueur initiale.

Par vitesse tangentielle différentielle, on entend la vitesse du film qui se déplace le long d'au moins un rouleau ou entraîné par la rotation d'au moins un rouleau tournant autour d'un axe, le film se déplaçant dans une direction perpendiculaire à l'axe de rotation du rouleau et s'appuyant sur une génératrice du rouleau.

Selon l'invention, le rouleau a une vitesse de rotation N constante dans le temps, tandis que la distance R entre la génératrice d'appui du film et l'axe de rotation du rouleau est variable dans le temps.

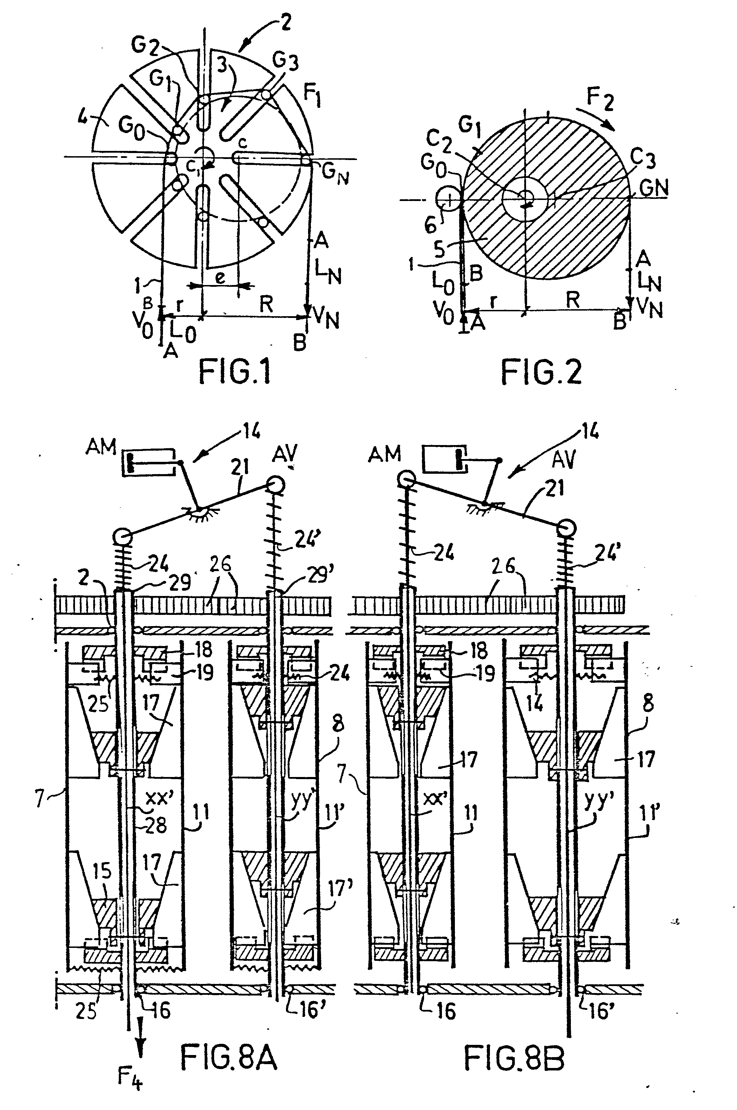

Sur la figure 1, on a représenté un premier mode de réalisation de l'invention. Un film 1 parvient en amont dans le dispositif 2 d'étirage et ressort de celui-ci en aval. La vitesse tangentielle du film 1 en amont étant $V_0$, la vitesse tangentielle du film 1 en aval est égale à $V_N$. Le dispositif 2 permet d'obtenir des vitesses tangentielles différentielles $V_N$ variables en divers points de film 1. Celui-ci est plan et est représenté sur la figure 1, perpendiculaire au plan de la figure. Il s'agit d'un film déformable élastiquement ou plastiquement, de préférence en matière synthétique. La longueur $L_0$ entre deux points AB du film en amont est inférieure à la longueur $L_N$ entre les mêmes points AB du film 1 en aval.

Selon l'invention, le dispositif 2 permet l'étirage du film 1, c'est-à-dire que le segment AB de longueur $L_0$ parvient progressivement à la longueur $L_N$ (figure 1).

Ce premier mode de réalisation comprend un rouleau 3, formé par une pluralité de génératrices $G_0$,......, $G_N$ contiguës. Les génératrices $G_N$ sont entraînées en rotation autour d'un axe C par un organe d'entraînement 4, préférentiellement au moins deux étoiles formées de sections de cercle planes placées à chaque extrémité des génératrices $G_N$. Le centre de rotation $C_1$ par lequel passe l'axe de rotation de l'étoile est décalé par rapport au centre de rotation C du rouleau d'étirage 3. Le sens de rotation de l'organe d'entraînement 4 est le même que le sens de rotation du rouleau d'étirage 3. Le film 1 est entraîné par la rotation d'au moins un rouleau 3 tournant autour d'un axe de rotation, perpendiculaire au plan de la figure, de centre C. Le film 1 se déplace dans une direction perpendiculaire à l'axe de rotation du rouleau d'étirage 3 et s'appuie sur une génératrice $G_N$ du rouleau 3, à un temps $t_N$. Ainsi, au temps $t_0$, le film 1 s'appuie sur la génératrice $G_0$, sa vitesse est $V_0$, au temps $t_1 = t_0 + \Delta t$, le film 1 s'appuie sur la génératrice $G_1$, sa vitesse est $V_1 = V_0 + \Delta V_0$, au temps $t_N$, le film s'appuie sur la génératrice $G_N$, sa vitesse $V_N = V_0 + \Sigma\Delta V_{N-1}$. De préférence les accroissements de vitesse $\Delta V_{N-1}$ sont constants, mais ils peuvent aussi varier. Le rouleau d'étirage 3 tourne dans le sens de la flèche $F_1$ et a une vitesse angulaire de rotation N constante dans le temps, tandis que la distance $R_N$ entre la génératrice d'appui $G_N$ et l'axe de rotation du rouleau d'étirage varie. Plus préférentiellement, les distances $C_1G_0$, ....,$C_1G_N$, sont telles que $C_1G_0 > .... > C_1G_N$, et la distance entre l'axe de rotation $C_1$ de l'organe d'entraînement 4 et la génératrice $G_0$ en amont est inférieure à la distance entre l'axe de rotation et la génératrice $G_N$ en aval. Cette distance $G_NC_1$ aug-

mente de façon continue dans le temps d'amont en aval. La distance initiale $G_0C_1$, en amont est égale à $r$, tandis que la distance finale en aval est égale à $R$.

Ce rapport d'étirage peut augmenter jusqu'à 2 ou 3, en tout cas il est très supérieur à 1 et peut aussi être réglé de façon à être inférieur à 1.

On peut faire en sorte que le rapport d'étirage soit égal à 1 lorsque l'on étire un film plastique qui est utilisé pour le banderolage de palettes. Ce rapport d'étirage égal à 1 est nécessaire en début du banderolage, le film ne devant pas être étiré. Dans ce cas la distance $CC_1$ est nulle. Ainsi, l'invention permet, par un déplacement relatif du centre C par rapport au centre $C_1$, de régler le rapport d'étirage d'une manière progressive.

Selon un deuxième mode de réalisation du dispositif selon l'invention, (figure 2), le rouleau d'étirage est un cylindre 5 de révolution, préférentiellement à base circulaire, dont l'axe l'axe de rotation du centre $C_2$ est décalé par rapport à l'axe de révolution du centre $C_3$. Le cylindre d'étirage est déformable, en matériau élastomère de préférence. Ainsi, la distance entre les génératrices contigües $G_0$, $G_1$, ....., $G_N$, augmente de façon continue au cours de la rotation (sens de la flèche $F_2$, lorsque le centre de rotation $C_2$ est décalé du côté amont par rapport au centre de révolution $C_3$.

Le film 1 s'appuie sur la génératrice $G_N$, à un instant $t_N$, et un rouleau 6 monté fou provoque la déformation du cylindre 5 déformable d'appui qui se déplace en effectuant une rotation autour du centre $C_3$. Le film est introduit en amont du côté où la distance $r = C_2 G_0$ entre le centre de rotation $C_2$

La distance $e$ entre le centre de rotation C du rouleau d'étirage 3 et le centre de rotation $C_1$ de l'organe d'entraînement 4 est réglable, ce qui permet de régler la vitesse tangentielle $V_N$ finale par rapport à la vitesse tangentielle $V_0$ initiale et donc de régler le rapport d'étirage

$$\frac{V_N}{V} \cdot$$

et la génératice $G_0$ est la plus faible et sort en aval du côté où la distance $R = C_2 G_N$ entre le centre de rotation $C_2$ et la génératrice $G_N$ est la plus grande.

En réglant la distance $C_2C_3$, à l'aide du rouleau 6, on règle le rapport d'étirage qui peut éventuellement être égal à 1 lorsque $C_2$ est confondu avec $C_3$.

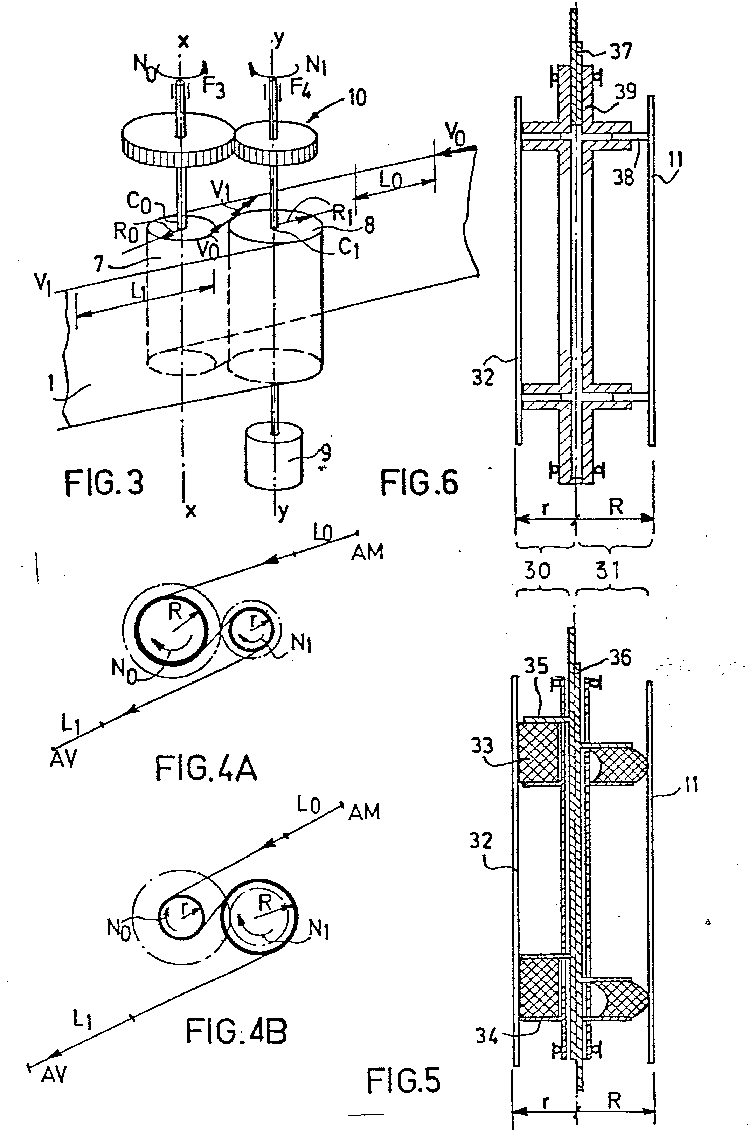

Selon un troisième mode de réalisation de l'invention (figures 3 à 8), le film se déplace le long de deux rouleaux 7, 8, cylindriques de révolution, à base circulaire, d'axes de rotation XX, YY, parallèles, le rayon $R_0$ du cylindre amont 7 et le rayon $R_1$ du cylindre aval 8 étant variables dans le temps. Le film 1 se déplace selon une direction perpendiculaire aux axes XX, YY.

Selon l'in ention la vitesse tangentielle $V_0$ du film 1 en amont est différente de la vitesse tangentielle $V_1$ du film 1 en aval.

Le film 1, animé de la vitesse $V_1$, peut entraîner l'ensemble des rouleaux 7 et 8. D'une autre manière le film 1 est entraîné à la vitesse $V_1$ par le rouleau 8 entraîné par un moteur 9.

Selon l'invention, les rouleaux 7,8, sont entraînés en rotation de façon que le rapport K de la vitesse de rotation $N_1$ du cylindre 8 à la vitesse de rotation $N_0$ de cylindre 7 soit constant. Leur sens de rotation est contraire. Le cylindre 7 tournant dans le sens de la flèche $F_3$, le cylindre 8 tourne dans le sens opposé (flèche $F_4$).

Ainsi, si on appelle E le rapport d'étirage du film et si $L_0$ est la longueur d'un segment AB en aval et $L_1$ la longueur du segment AB de film 1 en amont, on peut écrire

$$E = \frac{L_1}{L_0}$$

A l'instant $t$, on a $L_0 = V_0t$ et $L_1 = V_1t$.

$$\frac{L_1}{L_0} = E = \frac{V_1}{V_0}$$

Mais le vitesse tangentielle est égale au rayon du cylindre multiplié par la vitesse de rotation du cylindre.

$$\text{Ainsi, } V_1 = N_1 R_1$$

$$V_0 = N_0 R_0$$

$$E = \frac{V_1}{V_0} = \frac{N_1}{N_0} \frac{R_1}{R_0} = K \frac{R_1}{R_0}$$

$$K \text{ est selon l'invention égal à } \frac{N_1}{N_0}$$

En faisant varier les rayons $R_0$ et $R_1$ des cylindres amont 7 et aval 8, on fait varier le rapport des vitesses tangentielles $V_0$ et $V_1$.

La distance entre une génératrice $G_N$ au centre $C_0$ ou $C_1$ de rotation varie donc dans le temps, puisque l'on fait varier les rayons $R_0$ et $R_1$.

Si $R_0$ et $R_1$ varient entre des valeurs limites $\underline{r}$ et $\underline{R}$, lorsque $R_1 = r$ et $R_0 = R$, le rapport d'étirage $E$ est minimum, figure 4A, tandis que lorsque $R_1 = R$ et $R_0 = r$, le rapport d'étirage $E$ est maximum, figure 4B.

Ainsi, $E\text{ maxi} = R$ et $E\text{ mini} = r$ , $\dfrac{E\text{ maxi}}{E\text{ mini}} = \dfrac{R^2}{r^2}$

$\dfrac{E\text{ maxi}}{E\text{ mini}}$

Si l'on veut faire varier l'étirage de 0 à 100 % ,

$\dfrac{E\text{ maxi}}{E\text{ mini}} = 2$ et $\dfrac{R}{r} = V\,2$

R = 113 mm environ, par exemple

r = 80 mm environ.

Le rayon moyen est d'environ 97 mm.

Si l'on veut faire varier l'étirage de 0 à 200 % ,

$\dfrac{E\text{ maxi}}{E\text{ mini}} = 3$

r = 70 mm environ, par exemple,

R = 123 mm environ

et le rayon moyen est d'environ 97 mm.

Si l'on veut un rapport d'étirage E égal à 1, il faut pour le premier cas que K soit égal à 1,4 environ et dans le second cas égal à 1,7 environ. Les rapports K des vitesses de rotation des rouleaux sont réglés grâce à un dispositif d'engrenage 10.

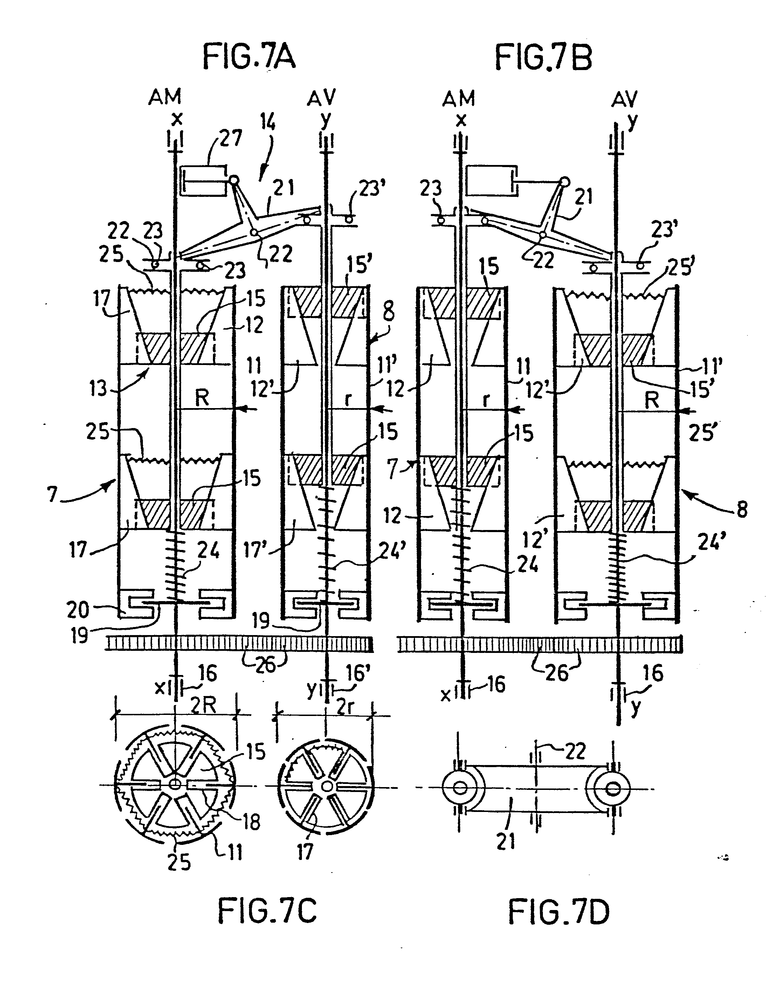

Selon un mode de réalisation de l'invention, représenté aux figures 7A, 7B, 7C, 7D, le dispositif de préétirage ou d'étirage variable comporte deux rouleaux 7,8, d'étirage constitués d'une pluralité des portions longitudinales incurvées 11, formant la surface cylindrique du rouleau. Les deux axes de rotation XX, YY des rouleaux sont parallèles.

Des organes de guidage 12 en translation radiale des portions 11 ont pour fonction d'éloigner ou rapprocher les portions 11 des axes XX et YY de rotation. Des moyens d'entraînement en rotation 13 des portions ont pour fonction de faire pivoter ces portions 11 autour des axes XX et YY et enfin des moyens de commande 14 ont pour fonction d'actionner les organes de guidage 12.

De préférence, les moyens d'entraînement en rotation 13 sont constitués par des moyeux 15 qui assurent l'entraînement en rotation des portions 11 par rapport à l'axe XX ou YY qui sont des axes cannelés. Les axes cannelés pivotent sur des paliers 16.

Les organes de guidage 12 en translation radiale des portions 11 sont constitués par des rampes 17 qui prennent appui dans des rainures 18 ménagées dans les moyeux 15. Chaque cylindre 11 comporte au moins deux moyeux 15. Les moyeux 15 d'une cylindre 7 coulissent simultanément le long de l'axe cannelé XX ou YY.

Les rampes 17 sont susceptibles de coulisser radialement dans les rainures 18. Ainsi, le rayon des cylindres 7,8 peut varier par coulissement radial des rampes 17 dans les rainures 18 et simultanément coulissement axial des moyeux 15.

Chaque rouleau 7,8 cylindrique comporte au moins un flasque 19 assurant le guidage en bout des portions 11. Des butées 20 peuvent coulisser radialement par rapport au flasque 19.

Le dispositif comporte en outre des moyens de commande 14 des organes de guidage 12 en translation radiale et axiale. Les moyens de commande 14 sont constitués par une fourchette double 21 pivotant autour d'un axe 22 perpendiculaire à l'axe de rotation XX, YY des rouleaux 7,8. La fourchette double 21 agit par l'intermédiaire d'une couronne d'appui 22 placée à une extrémité de l'axe de rotation XY, YY des rouleaux, sur une butée à bille 23.

Ainsi, lorsque la fourchette double 21 penche du côté du rouleau 7 amont (figure 7A) elle agit sur la butée 23, ce qui fait coulisser axialement les moyeux 15 du cylindre 7 amont. Ceux-ci sont déplacés vers l'extrémité de l'axe XX qui ne comporte pas la butée 23. Les moyeux 15 se déplaçant compriment le ressort de rappel 24. Les portions 11 et les rampes 17 sont plaquées sur les moyeux coulissants 15 grâce à des ressorts circonférentiels 25 qui sont placés à chaque niveau des rampes 17.

Les moyeux 15 en se déplaçant le long de l'axe XX poussent les portions 11 radialement vers l'extérieur, ce qui assure l'augmentation du rayon du rouleau 7 qui prend la valeur R.

Au contraire, la fourchette 21 est reliée à son autre extrémité du côté du rouleau aval 8, les moyeux 15 sont en position inverse des moyeux 15 du cylindre 7 aval. Le ressort de rappel 24 pousse les moyeux coulissants et les organes de commande vers la position correspondant à la valeur minimum de rayon du rouleau 8 aval qui prend la valeur r.

Des engrenanges 26 permettent de régler la vitesse de rotation du rouleau amont 7 par rapport à la vitesse de rotation du rouleau aval.

Sur la figure 7A, on a un rayon R en amont et r en aval, le rapport d'étirage est minimum.

Au contraire, par basculement en sens inverse de la fourchette 21 (figure 7B) on obtient un rayon r en amont et R en aval, le rapport l'étirage est maximum.

Le pivotement de la fourchette 21 est commandé par un organe de commande 27. Cet organe peut être comme représenté, un vérin hydraulique, pneumatique ou électrique ou encore un système vis-écrou manuel. Ainsi, à chaque position de l'organe 27 de commande de pivotement de la fourchette 21 correspond une valeur des rayons des rouleaux 7 et 8, donc une valeur de coefficient d'étirage. On peut contrôler électriquement des positions de l'organe 27, à partir de valeurs de consique préétablies ou programmées.

Dans un autre mode de réalisation (figures 8A et 8B) du dispositif selon l'invention, on place l'engrenage 26 du côté des moyens de commande 14. Les rampes 17 sont solidaires d'un arbre 28 concentrique à l'axe de rotation XX qui comporte une butée 29 sur laquelle s'appuie le ressort 24. La fourchette 21 en pivotant comprime le ressort 24, qui entraîne le déplacement des moyeux 15 axialement dans le sens de la flèche F₄, c'est-à-dire le sens du déplacement de la fourchette 21. Les rampes 17 coulissent radialement dans les rainures 18, ce qui entraîne l'expansion du cylindre aval 7. Au contraire, le cylindre amont 8 est comprimé.

De préférence les portions 11 comportent sur la surface externe un revêtement favorisant l'adhérence.

Sur les figures 5 et 6, d'autres formes de réalisation des rouleaux sont représentées. A gauche, de chaque figure se trouve de demi rouleau 30 de plus petit rayon et à droite se trouve le demi rouleau 31, de plus grand rayon.

A la figure 5, le demi rouleau 30 est constitué, comme le demi rouleau 31, de portions 32, qui sont solidaires d'éléments radiaux 33 qui sont compressibles. De préférence, ils sont constitués d'un élastomère. Ces éléments radiaux 33 sont disposé entre des cloisons radiales fixes 34 et des cloisons radiales mobiles 35 solidarisées à un arbre 36 qui peut coulisser axialement. Lorsqu'on effectue un déplacement axial de l'arbre 36, les cloisons mobiles 35 se rapprochant des cloisons fixes 34, l'élément élastomère est comprimé axialement et se déforme radialement en poussant la portion 32 radialement, vers l'extrérieur. Le rayon du rouleau augmente. Lorsque les cloisons mobiles 35 s'éloignent des cloisons fixes 34, l'élément élastomère reprend sa forme initiale. De préférence, les éléments élastomère sont placés à chaque extrémité de portions 11. Sur la figure 6, le déplacement des portions 11 se fait par un dispositif hydraulique. Le déplacement de l'arbre piston 37 entraîne le déplacement du support 38 de la portion 11, le liquide hydraulique transmettant la pression entre l'arbre-piston 37 et le support 38.

Le fluide hydraulique est situé dans la chambre formée par l'arbre creux 39, l'arbre 37 coulissant axialement et le support 38 coulissant radialement.

Dans certaines applications, les dispositifs décrits ci-avant notamment aux figures 1, 5, 6, 7A à 7D, 8A et 8B, ont pour inconvénient que les portions frappent sur le film tendu, ce qui a pour effet de provoquer un bruit dû aux coups répétés des portions ou barres métalliques sur le film tendu.

Par ailleurs, le film étiré subit un retrait transversal, à savoir la largeur finale du film étiré est inférieure à sa longueur initiale. Ceci est un inconvénient pour la bonne qualité du banderolage obtenu dans l'industrie d'emballage.

Par ailleurs, les portions formant les cylindres de révolution qui sont constituées de barres métalliques peuvent provoquer des déchirures sur le film tendu, du fait des arêtes des barres métalliques qui peuvent être plus ou moins coupantes.

En outre, les portions ou barres d'étirage mégalliques sont rappelées par des ressorts de rappel, dont la fonction est de donner un rayon inférieur au cylindre d'étirage lorsqu'on a auparavant donné un rayon plus important à ce cylindre d'étirage. Or, ces ressorts de rappel sont placés à l'intérieur des cylindres d'étirage formés par les diverses portions, et la réalisation pratique de tels dispositifs est complexe.

L'invention vise donc également à pallier ces inconvénients en prévoyant que les rouleaux comportent des moyens élastiques externes de rappel des portions vers l'axe de révolution.

Les moyens élastiques externes de rappel sont de préférence constitués par au moins une bande élastique disposée autour et à l'extérieur des portions.

Par exemple, les bandes élastiques sont des anneaux circulaires espacés les uns des autres. Ces anneaux, sont de préférence, solidarisés aux portions, par exemple, par collage.

Le fait que l'on place des moyens élastiques externes de rappel sur les portions permet de supprimer les ressorts de rappel qui provoquent la diminution du rayon des cylindres. En outre, les bandes élastiques diminuent, de façon notable, le bruit qui est créé par la frappe des portions ou barres métalliques sur le film tendu. Les moyens élastiques constituent, de plus, des moyens de protection du film, puisqu'ils recouvrent les arêtes des portions ou barres métalliques et évitent donc le contact entre le film étiré et ces portions ou barres métalliques.

Le rouleau 40 représenté à la figure 9 peut être soit un rouleau du type du rouleau 3 représenté à la figure 1, soit du type des rouleaux 7 et 8 représentés aux figures 7A-7D, 8A-8B ou encore des rouleaux 30, 31, représentés aux figures 5 et 6.

Ce rouleau 40 est constitué d'une pluralité de portions longitudinales $41_1$, $41_2$, $41_N$ qui forment la surface cylindrique du rouleau 40.

Selon l'invention, le rouleau 40 comporte des moyens élastiques 42 externes de rappel des portions $41_N$ vers l'axe X-X.

Par conséquent, lorsqu'on déplace, à l'aide des moyens d'écartement qui ont été précédemment décrits les portions $41_1$, $41_2$, $41_N$, pour augmenter le rayon $R_o$ ou le rayon $r_1$, les moyens élastiques externes 42 rappellent les portions $41_1$, $41_2$, $41_N$ en direction de l'axe XX de révolution du cylindre 40.

Ces moyens élastiques externes 42 sont constitués par une bande élastique disposée autour et à l'extérieur des portions $41_1$, $41_2$, $41_N$.

Selon un premier mode de réalisation de l'invention (figure 9), la bande élastique est constituée par plusieurs anneaux $43_1$, $43_2$, $43_N$, circulaires, d'axes XX, espacés les uns des autres. Ces anneaux circulaires, par exemple de hauteur $h$ ont un rayon $r$ sensiblement égal au rayon $r_o$ des rouleaux d'étirage, c'est-à-dire que le rayon $r$ des bandes $43_N$ est légèrement inférieur au plus petit rayon que le rouleau d'étirage puisse avoir. Ainsi, les bandes $43_1$, $43_2$, $43_N$ maintiennent les portions $41_1$, $41_2$, $41_N$ sensiblement jointives, lorsque ces bandes $43_1$, $43_2$ $43_N$ ne sont pas étirées.

Lorsque l'on soumet les portions $41_1$, $41_N$ à un déplacement axial dans le sens de la flèche $F_s$ dirigée vers l'extérieur, pour éloigner les portions $41_1$, $41_2$, $41_N$ de l'axe XX de révolution du rouleau 40, les bandes $43_1$, $43_2$, $43_N$ élastiques sont soumises à une force radiale qui fait que les bandes ont alors un rayon supérieur à leur rayon initial, sensiblement égal au rayon désiré pour le rouleau d'étirage. Les bandes sont alors soumises à une force qui les étire.

Lorsque les moyens d'écartement des portions $41_1$, $-41_N$ sont inactifs, les bandes ne sont plus soumises à la force $F_3$ et du fait qu'elles sont élastiques, elles ont tendance à revenir à leur forme initiale et à reprendre leur rayon $r$ initial et de ce fait, soumettent les portions $41_1$, $41_2$ et $41_N$ à une force contraire à la force $F_s$ pour les ramener en position initiale.

Les anneaux circulaires $43_1$, $43_2$, $43_N$ sont préférentiellement espacés les uns des autres d'une distance $e$.

De préférence, la distance $e$ entre deux anneaux successifs $43_1$, $43_2$ est égale à quelques millimètres, par exemple plus préférentiellement de 2 à 3 millimètres environ.

On a représenté plus particulièrement sur la figure 10, une vue agrandie de deux anneaux $43_1$, $43_2$ et du film 1 reposant sur ces deux anneaux. On voit que le film 1 repose sur les anneaux $43_1$ et $43_2$, tandis qu'il ne repose pas sur les portions elles-mêmes lorsqu'il se trouve entre les anneaux $43_1$, $43_2$, à savoir lorsqu'il se trouve dans l'espace formé entre les anneaux $43_1$ et $43_2$.

Sur la figure 11, on a représenté un second mode de réalisation de l'invention. La bande formant les moyens élastiques 42 est constituée de deux parties 44 et 45. La première partie 44 est une bande qui est enroulée hélicoïdalement dans un sens, et la seconde partie 45 est une autre bande qui est enroulée dans le sens hélicoïdal contraire.

La première partie 44 est enroulée, dans le sens contraire au sens de rotation du rouleau 40, et la seconde partie supérieure est enroulée dans le sens de la rotation du rouleau 40.

De même, les spires des bandes 44 et 45 ne sont pas jointives, et sont distantes d'une distance $e$. Cette distance est de préférence de quelques millimètres, et plus préférentiellement, de 2 à 3 millimètres environ.

Les spires hélocoïdales sont donc de pas contraire et sont réparties symétriquement par rapport à l'axe longitudinal Z-Z du film qui est étiré. Ainsi, le sens d'enroulement des hélices des bandes 44 et 45 est tel que le film est soumis à une composante de réaction des spires hélicoïdales sur le film, cette composante étant dirigée vers les bords externes 100 et 110 du film étiré 1 (figure 18). Par conséquent, le film 1 est soumis à un étirage transversal dans le sens des composantes de réaction des spires hélicoïdales sur le film - (direction et sens des flèches r) et le film ne subit alors pas de retrait transversal lors de son étirage ou du moins il subit un retrait transversal moindre que lorsqu'il est étiré par des rouleaux ne comportant pas de bande élastique hélicoïdale. Le plan d'une spire forme un angle $\alpha$ aigu avec la direction de déplacement $v_n$ du film étiré. De préférence $\alpha$ étant inférieur à 45°.

De plus, un avantage des moyens élastique 42, selon la présente invention est que les portions $41_1$, $41_N$ qui sont souvent des barres métalliques ne tapent pas le film puisque les moyens élastiques sont situés entre le film et ces barres métalliques. Le bruit qui est provoqué par le dispositif est donc réduit.

De plus, du fait que le film ne repose pas directement sur les portions $41_1$, $41_N$, il risque moins d'être déchiré par les arêtes de ces portions $41_1$, $41_N$.

Enfin, il est préférable que les anneaux circulaires $43_1$, $43_2$, $43_N$ ou les bandes 41, 45, enroulées hélicoïdalement soient solidarisés aux portions $41_1$, $41_N$ par exemple qu'ils soient fixés par collage.

Les anneaux et les bandes hélocoïdales sont constitués de préférence par une feuille de caoutchouc vulcanisé.

## Revendications

1. Dispositif d'obtention de vitesses différentielles tangentielles V variables en divers points d'un film (1) plan ou plaque plane déformable, se déplaçant le long d'au moins un rouleau d'étirage (3) tournant autour d'un axe XX, le film (1) ou plaque se déplaçant dans une direction perpendiculaire à l'axe de rotation du rouleau, et s'appuyant sur une génératrice G du rouleau, le rouleau (3) ayant une vitesse de rotation N constante dans le temps, tandis que la distance G $C_1$ entre la génératrice d'appui G du film et l'axe $C_1$ de rotation du rouleau est variable dans le temps, caractérisé par le fait que le rouleau d'étirage (3) est formé par une pluralité de génératrices G contiguës dont la distance à l'axe de rotation du rouleau d'étirage (3) augmente de façon continue dans le temps depuis la génératrice $G_0$ amont sur laquelle parvient le film non étiré jusqu'à la génératrice aval G que le film étirér quitte.

2. Dispositif selon la revendication 1, caractérisé par le fait que le rouleau d'étirage (3) est un cylindre (5) de révolution, notamment à base circulaire, dont l'axe de rotation $C_2$ est décalé par rapport à l'axe de révolution $C_3$, la distance entre les génératrices contiguës G augmentant de façon continue dans le temps depuis la génératrice amount $G_0$ sur laquelle parvient le film non étiré jusqu'à la génératrice aval G que le film étiré quitte.

3. Dispositif selon la revendication 2, caractérisé par le fait que le film (1) s'appuie sur la génératrice au moyen d'au moins un rouleau d'appui (6) exerçant une pression contre le rouleau d'étirage (5), ce rouleau d'appui tournant en fonction du déplacement de la génératrice G d'appui, le film (1) étant placé entre le rouleau d'appui (6) et le rouleau d'étirage (5).

4. Dispositif selon l'une quelconque des revendications 1 à 3, caractérisé par le fait que le rapport entre la distance initiale r séparant la génératrice amont $G_0$ de l'axe de rotation $C_2$ et la distance finale R séparant la génératrice aval G de l'axe de rotation $C_2$, est réglable.

5. Dispositif selon la revendication 1, caractérisé par le fait qu'il comporte une surface cylindrique (3) préférentiellement de révolution de centre C dont les génératrices, sont entraînées en rotation autour de $C_1$ par un organe d'entraînement (4), la distance entre l'axe de rotation $C_1$ des génératrices d'appui reposant sur la surface cylindrique (3) et l'axe de rotation C de la surface cylindrique étant réglable.

FIG.1

FIG.2

FIG.8A

FIG.8B

FIG.3

FIG.4A

FIG.4B

FIG.6

FIG.5

FIG.7A  FIG.7B

FIG.7C  FIG.7D

FIG 9

FIG 10

FIG 11

FIG 12